# EUROPEAN PATENT APPLICATION

(11) **EP 4 557 413 A1**
(43) Date of publication of application: **21.05.2025**
(21) Application number: 23210234.3
(22) Date of filing: 16.11.2023
(51) Int. Cl.: H01M 8/248, H01M 8/00, H01M 8/0228, H01M 8/2432, H01M 8/2457

(54) **END ASSEMBLY OF A FUEL CELL STACK AND FUEL CELL STACK**

(71) Applicant: AVL List GmbH, 8020 Graz (AT); AVL Fuel Cell Canada Inc, Burnaby, British Columbia V5A 4W2 (CA)
(72) Inventor: Raibeck, Laura, Vancouver, V5N 4G2 (CA)
(74) Representative: Gamper, Bettina

(57) **Abstract**

The invention is related to an end assembly (10) of a fuel cell stack (100) comprising an interface plate (12) comprising a plate half (22) of a bipolar plate (20), and a compression hardware (14) for compressing the fuel cell stack (100), wherein an end side (18) of the interface plate (12) is connected to the compression hardware (14) and a stack side (16) of the interface plate (12) is connected to a first or last membrane electrode assembly (30).

## Description

The present invention is related to an end assembly of a fuel cell stack and a fuel cell stack comprising at least one end assembly.

Fuel cell stacks can typically comprise membrane electrode assemblies (MEAs), bipolar plates and end assemblies comprising an interface plate and a stack compression hardware. The bipolar plates can be made of two plates halves. The plate halves can be either molded or stamped, requiring one forming tool for each plate half. Each tool can be quite expensive.

A fuel cell stack will have many bipolar plates. At each end of the fuel cell stack, interface plates, instead of bipolar plates, can be used. The interface plates can be made of two plate haves and will typically need a unique plate half on the side facing the stack compression hardware. Thus, for each unique plate half of the interface plate an additional expensive forming tool is needed. Otherwise, each unique plate half of the interface plate halves has to be produced with prototype manufacturing methods.

It is an object of the present invention to overcome the disadvantages described above at least partly. In particular, it is an object of the present invention to provide an end assembly of a fuel cell stack comprising an interface plate without a unique plate half in order to reduce the technical effort for production and the manufacturing cost.

Aforesaid problem is solved by an end assembly with the features of claim 1 as well as a fuel cell stack with the features of claim 15. Further features and details of the invention result from the subclaims, the description and the drawings. Features and details described in connection with the end assembly according to the invention naturally also apply in connection with the fuel cell stack according to the invention, and vice versa, so that reference is or can always be made mutually with regard to the disclosure concerning the individual aspects of the invention.

According to the present invention an end assembly of a fuel cell stack is described. The end assembly comprises an interface plate comprising a plate half of a bipolar plate, and a compression hardware for compressing the fuel cell stack. An end side of the interface plate is connected to the compression hardware and a stack side of the interface plate is connected to a first or last membrane electrode assembly.

As described the interface plate comprises a plate half of a bipolar plate. Such a plate half is also used in the bipolar plates of a fuel cell stack. Therefore, for such a plate half no additional forming tool for manufacturing such a plate half is required. Furthermore, the interface plate does not comprise a unique plate half on the side facing the stack compression hardware. Thus, no additional forming tool for manufacturing such a unique plate half is required. That means the invention reduces the tooling cost for producing the interface plate. Furthermore, the invention can reduce the part count because the unique plate half is omitted. That means there can be one to two fewer plate parts per fuel cell stack depending if the invention is used on one end or both ends of the fuel cell stack.

That an end side of the interface plate is connected to the compression hardware and a stack side of the interface plate is connected to a first or last membrane electrode assembly has the meaning that there is a mechanical contact between the end side of the interface plate and the compression hardware and there is a mechanical contact between the stack side of the interface plate and a first or last membrane electrode assembly.

Bipolar plates are components of proton exchange membrane fuel cells. They are responsible for transporting reactant gases, carrying the current from the membrane electrode assembly (MEA) to the end plates, providing heat and water management, and separating the individual cells.

Such a bipolar plate can comprise two plate halves. A plate half of a bipolar plate is therefore one part of the bipolar plate.

Each membrane electrode assembly (MEA) in a fuel cell stack is typically sandwiched between two bipolar plates. However, the first and last membrane electrode assembly is sandwiched between a bipolar plate and an end assembly.

The membrane electrode assembly (MEA) is an essential sandwich symmetrical-structure in proton exchange membrane fuel cells (PEMFC), comprising several layers of materials, i.e., a central layer of proton exchange membrane (PEM) inserted between two catalyst layers (CLs) and then covered by two porous gas diffusion layers (GDLs).

According to an aspect of the end assembly the interface plate consists of the plate half of the bipolar plate. That means the interface plate does not comprise any other plate than the plate half of the bipolar plate. Therefore, for the manufacturing of the interface plate no additional forming tool is required because the forming tool for manufacturing the plate half of the bipolar plate does already exist. The forming tool for manufacturing the plate half of the bipolar plate exists because the bipolar plates have to be manufactured.

According to a further aspect of the end assembly the interface plate comprises a reinforcement plate. The reinforcement plate is principally a plate without characteristics. It is only used to reinforce. Therefore, such a reinforcement plate is easy to manufacture.

According to a further aspect of the end assembly the reinforcement plate has ports and/or a reactant backfeed slot. Because of the ports and/or the reactant backfeed slot the neighboring plate half of a bipolar plate can be supplied with fluids as well as fluids can be drained away from the neighboring plate half of a bipolar plate. That means the ports and/or the reactant backfeed slot comprise vias so that fluids can flow from plate to plate.

According to a further aspect of the end assembly the reinforcement plate is bonded with conductive adhesive to the plate half of the bipolar plate. The bonding with conductive adhesive has the advantage that the need for a seal between the plate halves can be eliminated. Principally the reinforcement plate can be bonded everywhere with conductive adhesive to eliminate the need for an additional seal. Furthermore, the conductive adhesive has the advantage that it can conduct an electric current.

According to a further aspect of the end assembly the plate half of the bipolar plate comprises an anode plate or a cathode plate. Principally the bipolar plates of a fuel cell stack comprise an anode plate and a cathode plate. Since the interface plate comprises one plate half of a bipolar plate this plate half can be an anode plate or a cathode plate. Further, a fuel cell stack has two end assemblies. In one end assembly the interface plate can comprise an anode plate and in the other end assembly the interface plate can comprise a cathode plate.

According to a further aspect of the end assembly the compression hardware comprises ports and/or a reactant port. Because of the ports and/or the reactant port the respective membrane electrode assembly can be supplied with fluids as well as fluids can be drained away from the respective membrane electrode assembly. That means the ports and/or the reactant port comprise vias so that fluids can flow from plate to plate.According to a further aspect of the end assembly the compression hardware comprises hardware seals which go around the reactant port and/or the ports. The seals ensure that no fluids enter unwanted areas of the end assembly.

According to a further aspect of the end assembly the compression hardware comprises a gasket. The gasket can comprise the reactant flow supplied to the interface plate.

According to a further aspect of the end assembly the plate half of the bipolar plate is molded or stamped. The plate half is either molded or stamped, requiring one forming tool for the plate half. Such a tool can be quite expensive. However, the forming tool does not have to be made new for the interface plate because it already exists for manufacturing the bipolar plates.

According to a further aspect of the end assembly the plate half of the bipolar plate comprises reactant flow elements on a stack side of the plate half. The reactant flow elements are elements which direct the reactant flow. The reactant can be an oxidant or a fuel. The stack side of the plate half is the side of the plate half facing the stack.

According to a further aspect of the end assembly the plate half of the bipolar plate is flat on an end side of the plate half. The end side of the plate half is the side of the plate half facing the compression hardware. Because the end side of the plate half is flat the connection to the adjacent element can be easily realized on the end side of the plate half.

Further, according to the present invention a fuel cell stack for providing power is described. The fuel cell stack comprises a plurality of membrane electrode assemblies comprising a first membrane electrode assembly, a last membrane electrode assembly and middle membrane electrode assemblies and a plurality of bipolar plates. Further, the fuel cell stack comprises at least one end assembly as described, wherein each of the middle membrane electrode assemblies is arranged between two bipolar plates, and wherein the first membrane electrode assembly or the last membrane electrode assembly is arranged between one bipolar plate and the at least one end assembly.

The fuel cell stack can have an end assembly as described on both ends. That means the fuel cell stack can comprise two end assemblies as described.

Further advantages, features and details of the invention will be apparent from the following description, in which embodiments of the invention are described in detail with reference to the drawings. Those drawings show:
- Figure 1: a schematic view of a section through a fuel cell stack,
- Figure 2a: a schematic top view of an interface plate,
- Figure 2b: a schematic top view of a compression hardware,
- Figure 3: a schematic view of a section through an end assembly,
- Figure 4a: a schematic top view of a plate half,
- Figure 4b: a schematic top view of a reinforcement plate,
- Figure 4c: a schematic top view of a compression hardware, and
- Figure 5: a schematic view of a section through an end assembly.

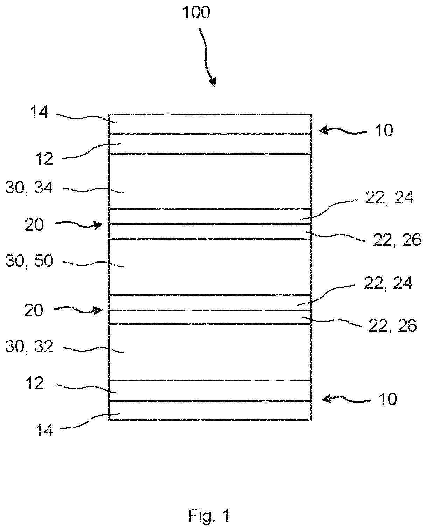

Fig. 1 shows a schematic view of a section through a fuel cell stack 100. The fuel cell stack 100 can be used to provide power. The fuel cell stack 100 comprises a plurality of membrane electrode assemblies 30, a plurality of bipolar plates 20 and two end assemblies 10. The plurality of membrane electrode assemblies 30 comprise a first membrane electrode assembly 32, a last membrane electrode assembly 34 and middle membrane electrode assemblies 50. All membrane electrode assemblies 30 are the same. As can be seen in Fig. 1 there is only one middle membrane electrode assembly 50. Each end assembly 10 can comprise an interface plate 12 and a compression hardware 14.

The middle membrane electrode assembly 50 is arranged between two bipolar plates 20. The first membrane electrode assembly 32 and the last membrane electrode assembly 34 are arranged between a bipolar plate 20 and one of the two end assemblies 10.

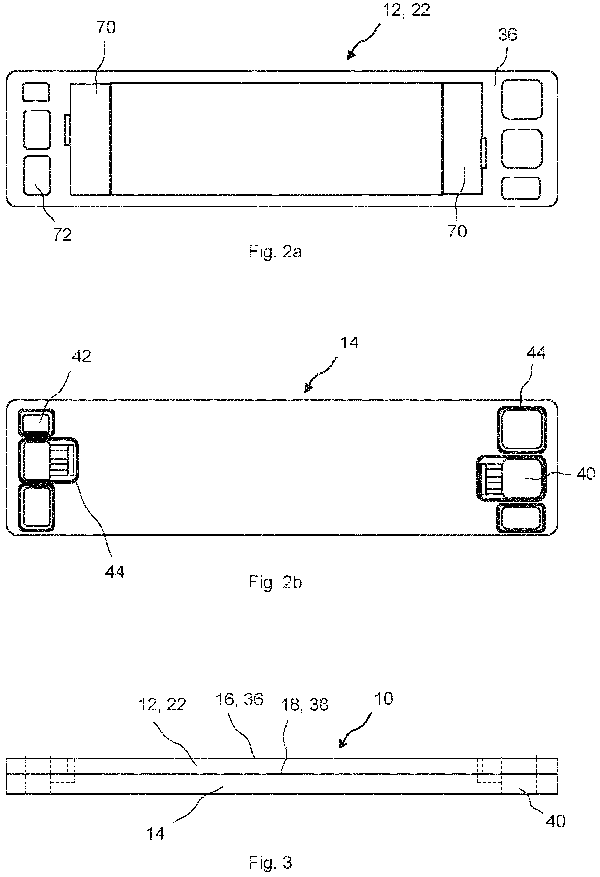

Fig. 2a, Fig. 2b and Fig. 3 describe an embodiment of an end assembly 10 of a fuel cell stack 100 as shown in Fig. 1. The end assembly 10 comprises an interface plate 12 and a compression hardware 14 for compressing the fuel cell stack 100. The interface plate 12 comprises a plate half 22 of a bipolar plate 20. An end side 18 of the interface plate 12 is connected to the compression hardware 14 and a stack side 16 of the interface plate 12 is connected to a first or last membrane electrode assembly 30.

Fig. 2a shows a schematic top view of an interface plate 12. The interface plate 12 consists of the plate half 22 of a bipolar plate 20. Since the forming tool for manufacturing the plate half 22 of a bipolar plate 20 already exists there is no need to provide an additional forming tool for manufacturing the interface plate 12. This makes it very easy to manufacture the interface plate 12.

The plate half 22 of a bipolar plate 20 can be an anode plate 24 or a cathode plate 26. Therefore, it is possible that one of the end assemblies 10 of a fuel cell stack 100 comprises an anode plate 24 and the other of the end assemblies 10 comprises a cathode plate 26. Further, the plate half 22 of a bipolar plate 20 can be molded or stamped.

The plate half 22 of a bipolar plate 20 has a stack side 36 facing in the direction of the stack and an end side 38 facing in the direction of the compression hardware 14. Further, the plate half 22 of a bipolar plate 20 can comprise reactant flow elements 70 on the stack side 36 of the plate half 22. The reactant flow elements 70 are used to direct the flow of the reactant. The reactant can be an oxidant or a fuel.

Furthermore, the plate half 22 comprises ports 72.

Fig. 2b shows a schematic top view of a compression hardware 14. The compression hardware 14 comprises ports 42 and/or a reactant port 40. The ports 42 and the reactant port 40 are used for the supply with the appropriate fluids. Further, the compression hardware 14 comprises hardware seals 44 which go around the reactant port 40 and/or the ports 42.

Fig. 3 shows a schematic view of a section through an end assembly 10. The end assembly 10 comprises the interface plate 12 (as can be seen in Fig. 2a) and the compression hardware 14 (as can be seen in Fig. 2b).

The end side 38 of the plate half 22 is the side facing the compression hardware 14. The plate half 22 of a bipolar plate 20 can be flat on the end side 38 of the plate half 22.

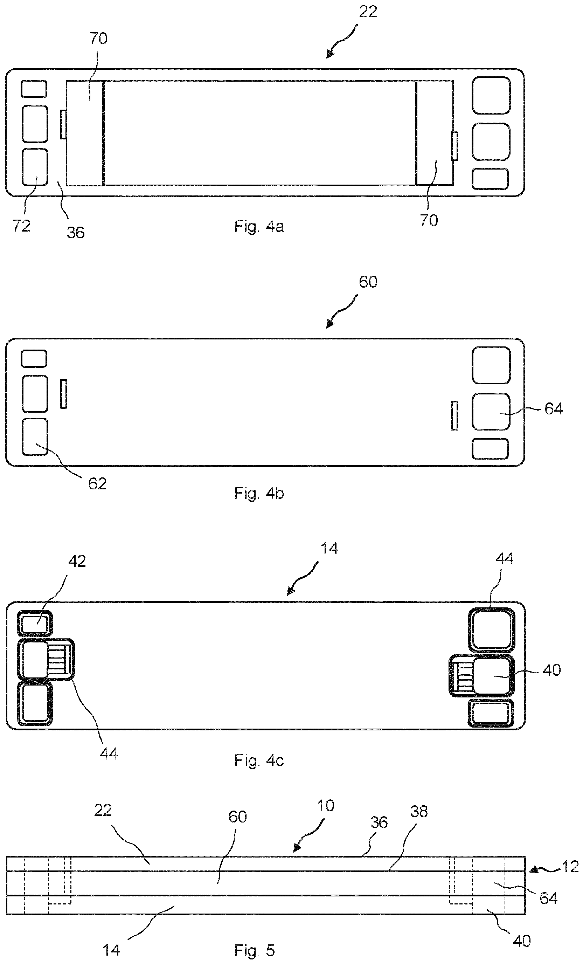

Fig. 4a, Fig. 4b, Fig. 4c and Fig. 5 describe a further embodiment of an end assembly 10. The end assembly 10 comprises an interface plate 12 and a compression hardware 14 for compressing the fuel cell stack 100. The interface plate 12 comprises a plate half 22 of a bipolar plate 20 and a reinforcement plate 60.

Fig. 4a shows a schematic top view of a plate half 22. The plate half 22 is analogous to the plate half 22 shown in Fig. 2a.

Fig. 4b shows a schematic top view of a reinforcement plate 60. The reinforcement plate 60 is used to reinforce the plate half 22. The reinforcement plate 60 comprises ports 62 and/or a reactant backfeed slot 64. The ports 62 and the reactant backfeed slot 64 are used for the supply with the appropriate fluids. Furthermore, the reinforcement plate 60 can be bonded with conductive adhesive to the plate half 22 of a bipolar plate 20.

Fig. 4c shows a schematic top view of a compression hardware 14. The compression hardware 14 is analogous to the compression hardware 14 shown in Fig. 2b.

Fig. 5 shows a schematic view of a section through an end assembly 10. The end assembly 10 comprises the plate half 22 (as can be seen in Fig. 4a), the reinforcement plate 60 (as can be seen in Fig. 4b) and the compression hardware 14 (as can be seen in Fig. 4c). As can be seen in Fig. 5 the reinforcement plate 60 is arranged next to the compression hardware 14. Alternatively, the order of the plate half 22 of a bipolar plate 20 and the reinforcement plate 60 can be changed so that the plate half 22 of a bipolar plate 20 is arranged next to the compression hardware 14.

The above description of the drawings describes the present invention by way of example only.

### Reference signs

- 10: end assembly
- 12: interface plate
- 14: compression hardware
- 16: stack side of the interface plate
- 18: end side of the interface plate
- 20: bipolar plate
- 22: plate half of a bipolar plate
- 24: anode plate
- 26: cathode plate
- 30: membrane electrode assembly
- 32: first membrane electrode assembly
- 34: last membrane electrode assembly
- 36: stack side of the plate half
- 38: end side of the plate half
- 40: reactant port of the compression hardware
- 42: port of the compression hardware
- 44: hardware seal of the compression hardware
- 50: middle membrane electrode assembly
- 60: reinforcement plate
- 62: port of the reinforcement plate
- 64: reactant backfeed slot of the reinforcement plate
- 70: reactant flow element
- 72: port of the plate half
- 100: fuel cell stack

## Claims

1. End assembly (10) of a fuel cell stack (100), **characterized by**
an interface plate (12) comprising a plate half (22) of a bipolar plate (20), and
a compression hardware (14) for compressing the fuel cell stack (100),
wherein an end side (18) of the interface plate (12) is connected to the compression hardware (14) and a stack side (16) of the interface plate (12) is connected to a first or last membrane electrode assembly (30).

2. End assembly (10) according to claim 1, **characterized in that** the interface plate (12) consists of the plate half (22) of the bipolar plate (20).

3. End assembly (10) according to claim 1, **characterized in that** the interface plate (12) comprises a reinforcement plate (60).

4. End assembly (10) according to claim 3, **characterized in that** the reinforcement plate (60) has ports (62) and/or a reactant backfeed slot (64).

5. End assembly (10) according to claims 3 or 4, **characterized in that** the reinforcement plate (60) is bonded with conductive adhesive to the plate half (22) of the bipolar plate (20).

6. End assembly (10) according to any of the preceding claims, **characterized in that** the plate half (22) of the bipolar plate (20) comprises an anode plate (24) or a cathode plate (26).

7. End assembly (10) according to any of the preceding claims, **characterized in that** the compression hardware (14) comprises ports (42) and/or a reactant port (40).

8. End assembly (10) according to claim 7, **characterized in that** the compression hardware (14) comprises hardware seals (44) which go around the reactant port (40) and/or the ports (42).

9. End assembly (10) according to any of the preceding claims, **characterized in that** the compression hardware (14) comprises a gasket.

10. End assembly (10) according to any of the preceding claims, **characterized in that** the plate half (22) of the bipolar plate (20) is molded or stamped.

11. End assembly (10) according to any of the preceding claims, **characterized in that** the plate half (22) of the bipolar plate (20) comprises reactant flow elements (70) on a stack side (36) of the plate half (22).

12. End assembly (10) according to any of the preceding claims, **characterized in that** the plate half (22) of the bipolar plate (20) is flat on an end side (38) of the plate half (22).

13. Fuel cell stack (100) for providing power, comprising
a plurality of membrane electrode assemblies (30) comprising a first membrane electrode assembly (32), a last membrane electrode assembly (34), and middle membrane electrode assemblies (50), and
a plurality of bipolar plates (20),
**characterized by**
at least one end assembly (10) according to any of claims 1 to 12, wherein each of the middle membrane electrode assemblies (50) is arranged between two bipolar plates (20), and wherein the first membrane electrode assembly (32) or the last membrane electrode assembly (34) is arranged between one bipolar plate (20) and the at least one end assembly (10).
